Europäisches Patentamt

**European Patent Office**

Office européen des brevets

(11) Veröffentlichungsnummer: **0 020 596
B1**

(12) **EUROPÄISCHE PATENTSCHRIFT**

(45) Veröffentlichungstag der Patentschrift:
**08.09.82**

(21) Anmeldenummer: **79901567.2**

(22) Anmeldetag: **03.12.79**

(86) Internationale Anmeldenummer:
**PCT/CH 79/00155**

(87) Internationale Veröffentlichungsnummer:
**WO 80/01440 (10.07.80 Gazette 80/15)**

(51) Int. Cl.³: **H 02 B 13/02**

(54) **Umschalteinrichtung für Mittelspannungsschaltfelder.**

(30) Priorität: **27.12.78 DE 2856187**

(43) Veröffentlichungstag der Anmeldung:
**07.01.81 Patentblatt 81/1**

(45) Bekanntmachung des Hinweises auf die Patenterteilung:
**08.09.82 Patentblatt 82/36**

(84) Benannte Vertragsstaaten:
**AT CH FR GB NL SE**

(56) Entgegenhaltungen:
**DE-C-599 393
FR-A-1 279 475**

(73) Patentinhaber: **BBC Aktiengesellschaft Brown, Boveri & Cie., CH-5401 Baden (CH)**

(72) Erfinder: **KRÄMER, Wilhelm, Hegelstrasse 2, · 6962 Sandhausen (DE)**

(74) Vertreter: **Kempe, Wolfgang, Dr. et al, c/o Brown, Boveri & Cie AG Postfach 351, D-6800 Mannheim 1 (DE)**

## Umschalteinrichtung für Mittelspannungs-Schaltfelder

Die Erfindung bezieht sich auf eine nach dem Prinzip von Schubtrennschaltern arbeitende Umschalteinrichtung für Mittelspannungs-Schaltfelder nach dem Oberbegriff des Anspruches 1.

Um den verschiedenen Betriebsverhältnissen in Verteiler-, Netz- und Industrieanlagen zu genügen, können die hier eingesetzten Mittelspannungs-Schaltfelder mit Einfach- oder Doppel-Sammelschienen ausgestattet werden.

Bei der Verwendung von Doppel-Sammelschienen ist jeder Sammelschiene ein Trennschalter zugeordnet, über den der Leistungsschalter jeweils auf die eine oder andere Sammelschiene aufschaltbar ist. Zur Realisierung der Umschaltmöglichkeit für den Leistungsschalter auf ein Sammelschienensystem I oder II werden unterschiedliche Umschalteinrichtungen benutzt.

So ist eine Anordnung mit Dreistützerdrehtrennern bekannt geworden. Aufgrund der pro Schalterpol erforderlichen drei Stützer beanspruchen diese Trenner relativ viel Platz im Schaltfeld. Ferner ist der Kostenaufwand für die drei Stützer pro Trennerschaltpol, die aus hochwertigen Isolatoren bestehen, sehr hoch.

Weiterhin ist es bekannt, als Doppelsammelschienen-Trennschalter Zweistützerklapptrenner zu verwenden. Auch diese beanspruchen einen grossen Teil des Schaltfeldraumes, insbesondere aufgrund des aufklappbaren Trennmessers, das von einem zum anderen Stützer schwenkbar sein muss (FR-A-1 279 475, Fig. 12). Die Verbindungsleiter zwischen dem Zweistützerklapptrenner und den Sammelschienen-Systemen werden durch verschieden gekröpfte Leiter hergestellt, was sich ebenfalls als platzaufwendig erweist. Für die Abschottung des Sammelschienenraumes werden ausserdem mitschwenkbare Durchführungen in der Blechwandung des Sammelschienenraumes benötigt, was insgesamt einen beachtlichen Aufwand erfordert.

· Bekannt sind schliesslich auch Schubtrennschalter, welche im Zusammenhang mit den Umschalterfordernissen von einem auf ein anderes Sammelschienen-System Anwendung finden (DE-C-599 393). Hierbei werden pro Phase zwei Schubtrennschalter benötigt, wobei jeder Schalter und auch das jedem Schalter zugeordnete Antriebsaggregat gesondert unterhalb der Sammelschienen-Systeme an Wandungsteilen befestigt und entsprechende Betätigungsgestänge verlegt werden müssen. Diese Art und Weise der Anordnung einer Umschalteinrichtung erfordert nicht zuletzt gewisse Justier- oder Anpassarbeiten an die jeweiligen Abmessungen der Schaltfelder.

Der Erfindung liegt die Aufgabe zugrunde, eine Umschalteinrichtung in platzsparender Anordnung zu schaffen, um einen Leistungsschalter in einem Mittelspannungs-Schaltfeld mit Doppelsammelschienen von einem Sammelschienen-System auf ein zweites Sammelschienen-System umzuschalten.

Diese Aufgabe wird erfindungsgemäss durch die kennzeichnenden Merkmale des Anspruchs 1 gelöst. Eine derartige Umschalteinrichtung kann weitgehend fabrikmässig vormontiert werden und erfordert nur einen geringen Montageaufwand am Aufstellungsort der Mittelspannungs-Schaltfelder. Zudem erweist sich eine solche Umschalteinrichtung und deren Anordnung als besonders platzsparend und gleichzeitig als zuverlässig und sicher.

Eine zweckmässige Weiterbildung der Erfindung nach dem Anspruch 1 ist dem Anspruch 2 zu entnehmen, welcher sich mit den Befestigungsmöglichkeiten des erfindungsgemässen Schaltpoles und dessen Kontaktierung mit den zugeordneten Sammelschienen befasst.

Für ein Mittelspannungs-Schaltfeld mit darin übereinander angeordneten Sammelschienen-Paaren wird weiterhin eine besonders zweckmässige Anordnung der erfindungsgemässen Umschalteinrichtung vorgeschlagen, und zwar besteht sie darin, die einzelnen Schaltpole in den übereinanderliegenden Ebenen der jeweils einander zugeordneten Sammelschienen anzuordnen und derart zu montieren, dass die Längsachsen der betätigbaren Kontaktstücke quer zu den Längsachsen der Sammelschienen verlaufen. Hierbei ist es zweckmässig, die einzelnen Schaltpole der gesamten Umschalteinrichtung für einen Leistungsschalter so anzuordnen, dass sie eine in Längsrichtung der Sammelschienen verlaufende seitliche Versetzung zueinander aufweisen, und im übrigen die einzelnen Schaltpole so zu montieren, dass ihre Anschlüsse für die Verbindungsleiter senkrecht nach unten führen. Mittels einer solchen Anordnung können sowohl eine Übersichtlichkeit erzielt werden als auch weitgehend geradlinige, unaufwendig herstellbare Verbindungsleiter Verwendung finden.

Für Mittelspannungs-Schaltfelder mit einzeln geschotteten Sammelschienenräumen wird schliesslich in vorteilhafter Weise vorgeschlagen, die einzelnen Schaltpole der Umschalteinrichtung in einem mit einem Leistungsschalterraum in Verbindung stehenden Zwischenraum zwischen den beiden geschotteten Sammelschienenräumen anzuordnen und diese Schaltpole an den einander zugekehrten Schottwandungen der Sammelschienenräume zu befestigen. Auf diese Weise können die erforderlichen Durchführungen gleichzeitig der Halterung der einzelnen Schaltpole dienen, wodurch der sonst erforderliche Aufwand auch wiederum vereinfacht ist.

Die mit der Erfindung erzielbaren Vorteile bestehen also insbesondere darin, dass im Gegensatz zu den bisher bekannten Schalteinrichtungen und Anordnungen innerhalb von Schaltfeldern, wonach beispielsweise jeder der beiden Sammelschienen ein gesonderter Trennschalter pro Phase zugeordnet werden musste, eine erfindungsgemässe Umschalteinrichtung nunmehr beiden Sammelschienen gemeinsam dient. Genannt wurden bereits die Vorteile der weitgehenden fabrikmässigen Vormontage und die damit erzielbare Kosteneinsparung sowie die im Schaltfeld erzielbare Platzersparnis.

Ein Ausführungsbeispiel der Erfindung ist in der Zeichnung dargestellt und wird im folgenden näher beschrieben.

Es zeigt

Fig. 1 im Querschnitt ein Mittelspannungs-Schaltfeld mit einer Doppel-Sammelschiene;

Fig. 2 im Detail und schematisch eine Seitenansicht der Umschalteinrichtung und eine Sammelschiene.

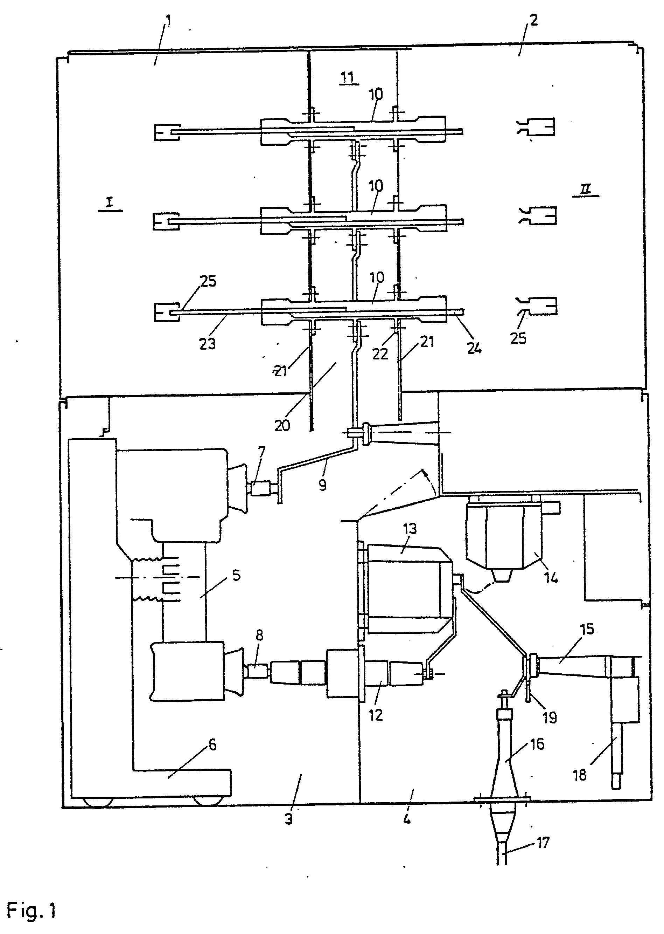

Der Figur 1 ist ein im Querschnitt dargestelltes, blechgekapseltes Schaltfeld mit einer Doppel-Sammelschiene zu entnehmen, das zum Schutz gegen Auswirkungen aufgrund von Lichtbogenfehlern nochmals abgeschottet ist in einen Sammelschienenraum 1, einen Sammelschienenraum 2, einen Leistungsschalterraum 3 und einen Kabelanschlussraum 4. Das Schaltfeld ist mit einem ausfahrbaren Leistungsschalter 5 versehen, der auf einem Schaltwagen 6 montiert ist und im eingefahrenen Zustand über Trennkontakte 7, 8 mit dem Schaltfeld elektrisch verbunden ist. Dabei ist der Leistungsschalter über den Trennkontakt 7, den Verbindungsleiter 9 und die Schaltpole 10 der Umschalteinrichtung 11 auf das Sammelschienensystem I oder II aufschaltbar, während der Leistungsschalter über den Trennkontakt 8, eine Bolzendurchführung 12, einen Stromwandler 13, einen Spannungswandler 14 sowie über den Erdungsschalter 15 und einen Kabelendverschluss 16 mit einem Abgangskabel 17 verbunden ist. Durch Einlegen des Erdungsmessers 18 in den Gegenkontakt 19 des Erdungsschalters wird der Kabelabgang auf Erdpotential geschaltet. Die Umschalteinrichtung 11 ist in einem mit dem Leistungsschalterraum 3 in Verbindung stehenden Zwischenraum 20 zwischen den beiden Sammelschienenräumen 2, 3 angeordnet. Die einzelnen Schaltpole sind beidseitig über Flansche 22 in den Wänden 21 der Sammelschienenräume gehalten und befestigt. Jeder Schaltpol weist zwei in axialer Richtung gegensinnig betätigbare Kontaktstücke 23, 24 auf, die mit einem in den Sammelschienenleiter integrierten Gegenkontaktstück 25 in Eingriff gebracht werden können. Die beweglichen Kontaktstücke 23, 24 werden über nicht näher dargestellte, separate Antriebe betätigt, die aus einem Elektromotor mit Getriebe und einem aus einer Zahnstange und einem Ritzel gebildeten Übertragungsglied bestehen können.

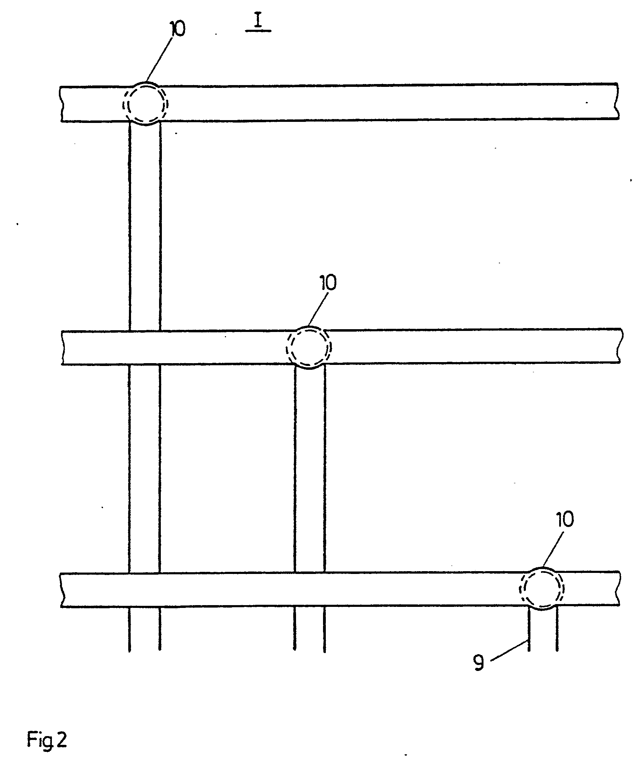

Die Fig. 2 zeigt die seitliche Anordnung der einzelnen Schaltpole 10 der Umschalteinrichtung 11 im Zusammenhang mit dem Sammelschienensystem I und den Verbindungsleitern 9 zum Leistungsschalter.

**Patentansprüche**

1. Nach dem Prinzip von Schubtrennschaltern mit in axialer Richtung gegensinnig mittels gesonderten Antriebsaggregaten betätigbaren Kontaktstücken (23, 24) und einer den Kontaktstücken (23, 24) gemeinsamen Leiter-Anschlussstelle arbeitende, insbesondere mehrere Schaltpole (10) enthaltende, Umschalteinrichtung (11) für Mittelspannungs-Schaltfelder, welche der Umschaltung eines Leistungsschalters (5) von einem Sammelschienen-System I auf ein Sammelschienen-System II dient, dadurch gekennzeichnet, dass die Funktionsteile eines Schaltpoles (10) zu einer mittels flanschartigen Halterungen (22) am Schaltfeld montierbaren Einheit mit den beiden in axialer Richtung von gesonderten Elektrogetriebemotoren über Ritzel und Zahnstangen gegensinnig betätigbaren Kontaktstücken (23, 24) zusammengefasst sind, von welcher die den Kontaktstücken (23, 24) gemeinsame Leiter-Anschlussstelle für einen Verbindungsleiter (9) ausgeht, und dass diese Einheit in der Verbindungsebene eines einander zugeordneten Sammelschienen-Paares der beiden Sammelschienen-Systeme (I und II) zwischen diesen Sammelschienen angeordnet ist.

2. Umschalteinrichtung nach Anspruch 1, dadurch gekennzeichnet, dass die betätigbaren Kontaktstücke (23, 24) der Schaltpole (10) in Gegenkontaktstücke (25) einfahrbar sind, welche an den einzelnen Sammelschienen unmittelbar angeordnet sind.

3. Mit einer Umschalteinrichtung nach einem der Ansprüche 1 oder 2 ausgestattetes Mittelspannungs-Schaltfeld mit darin übereinander angeordneten Sammelschienen-Paaren, dadurch gekennzeichnet, dass die einzelnen Schaltpole (10) in den übereinanderliegenden Ebenen der jeweils einander zugeordneten Sammelschienen angeordnet und derart montiert sind, dass die Längsachsen der betätigbaren Kontaktstücke (23, 24) quer zu den Längsachsen der Sammelschienen verlaufen.

4. Mittelspannungs-Schaltfeld nach Anspruch 3, dadurch gekennzeichnet, dass die einzelnen Schaltpole (10) der Umschalteinrichtung (11) eine in Längsrichtung der Sammelschienen verlaufende seitliche Versetzung zueinander aufweisen und dass ihre Anschlüsse für die Verbindungsleiter (9) senkrecht nach unten geführt sind.

5. Mittelspannungs-Schaltfeld nach den Ansprüchen 3 oder 4 mit je einem geschotteten Sammelschienenraum (1, 2) für jedes Sammelschienensystem (I und II), dadurch gekennzeichnet, dass die einzelnen Schaltpole (10) der Umschalteinrichtung (11) in einem mit einem Leistungsschalterraum (3) in Verbindung stehenden Zwischenraum (20) zwischen den beiden geschotteten Sammelschienenräumen (1, 2) angeordnet und an den einander zugekehrten Schottwandungen dieser Sammelschienenräume (1, 2) befestigt sind.

**Revendications**

1. Dispositif de commutation (11) pour panneaux de commutation de tension moyenne, qui sert à la commutation d'un commutateur de puissance (5), d'un système à barres collectrices (I) à un système à barres collectrices (II), qui contient en particulier plusieurs pôles de commutation (10) et qui travaille selon le principe des sectionneurs coulissants comportant des pièces de contact (23, 24), actionnables en sens contraire dans la direction axiale au moyen d'ensembles de commande séparés, et un arrangement de raccordement de conducteurs, commun aux pièces de contact (23, 24), caractérisé en ce que les pièces fonctionnelles d'un pôle de commutation (10) sont rassemblées en une unité, montable sur le panneau de commutation au moyen de fixations (22) du type rebords, avec les deux piéces de contact (23, 24) actionnables en sens contraire, dans la direction axiale, par des moteurs électriques séparés à réducteur, par l'intermédiaire de pignons et crémaillères, d'où part l'arrangement de raccordement de conducteurs commun aux pièces de contact (23, 24), pour un conducteur de liaison (9), et en ce que l'unité est disposée dans le plan de connexion d'une paire de barres collectrices mutuellement associées de deux systèmes (I et II) de barres collectrices, entre celles-ci.

2. Dispositif de commutation selon la revendication 1, caractérisé en ce que les pièces de contact (23, 24) actionnables des pôles de commutation (10) peuvent être introduites dans des contre-pièces de contact (25) qui sont disposées directement sur les barres collectrices individuelles.

3. Panneau de commutation de tension moyenne équipé d'un dispositif de commutation selon l'une des revendications 1 ou 2 et comportant des paires de barres collectrices qui y sont disposées l'une sur l'autre, caractérisé en ce que les pôles de commutation individuels (10) sont disposés dans les plans, placés l'un sur l'autre, des barres collectrices mutuellement associées et sont montés de telle manière que les axes longitudinaux des pièces de contact actionnables (23, 24) s'étendent transversalement par rapport aux axes longitudinaux des barres collectrices.

4. Panneau de commutation de tension moyenne selon la revendication 3, caractérisé en ce que les pôles de commutation individuels (10) du dispositif de commutation (11) présentent l'un par rapport à l'autre un décalage latéral dans la direction longitudinale des barres collectrices et en ce que leurs raccordements aux conducteurs de liaison (9) sont guidés verticalement vers le bas.

5. Panneau de commutation de tension moyenne selon les revendications 3 ou 4 comportant un espace respectif cloisonné pour barres collectrices (1, 2), pour chaque système (I et II) de barres collectrices, caractérisé en ce que les pôles de commutation individuels (10) du dispositif de commutation (11) sont disposés dans un espace intermédiaire (20), se trouvant entre les deux espaces cloisonnés (1, 2) pour barres collectrices et communiquant avec un espace de commutateur de puissance (3), et sont fixés aux parois étanches se faisant vis-à-vis de ces espaces (1, 2) pour barres collectrices.

**Claims:**

1. A changeover device (11) for medium-voltage switchgear panels, in particular comprising a plurality of switching poles (10), which operates in the manner of a thrust blade switch, having axially reciprocatable contact members operable by individual actuating units and a conductor connection position common to the contact members, in particular for changing over a load circuit breaker (5) from a busbar system I to a busbar system II, characterised in that the operative elements of one switching pole (10) are combined into a unit with two contact members (23, 24) axially reciprocatable by separate electric driving motors by way of pinions and racks, which unit is mountable on the switchgear panel by means of flange-like mountings (22) and from which extends the connection position for a connection line, common to the contact members, and that this unit can be positioned in the connection plane of a pair of corresponding busbars of the two busbar systems (I and II) between these busbars.

2. A changeover device according to claim 1 characterised in that the contact members (23, 24) of the switching poles (10) can be inserted into counter-contacts (25) arranged directly on the individual busbars and partly enclosing the latter.

3. A medium-voltage switchgear panel provided with a changeover device according to claim 1 or 2 and having therein busbar pairs arranged one above another, characterised in that the individual switching poles (10) are arranged in the superposed planes of the respectively corresponding busbars and are so mounted that the longitudinal axes of the contact members (23, 24) run transversely to the longitudinal axes of the busbars.

4. A medium-voltage switchgear panel according to claim 3 characterised in that the individual switching poles (10) of the changeover device (11) are laterally offset relative to one another in the longitudinal direction of the busbars, and their connection points for the connection line (9) lead vertically downwards.

5. A medium-voltage switchgear panel according to claim 3 or 4 having a respective enclosed busbar chamber (1, 2) for each busbar system (I and II), characterised in that the individual switching poles (10) of the changeover device (11) are arranged in an immediate compartment (20) between the two enclosed busbar compartments (1, 2) and communicating with a load circuit breaker chamber (3), and are attached to the mutually facing walls of these busbar compartments.

Fig. 1

Fig 2